(19) Europäisches Patentamt
European Patent Office
Office européen des brevets

(11) Publication number: **0 020 604**
**B1**

(12) **EUROPEAN PATENT SPECIFICATION**

(45) Date of publication of patent specification: **14.08.85**

(51) Int. Cl.$^4$: **C 08 L 63/00,** C 08 L 83/04

(21) Application number: **79901583.9**

(22) Date of filing: **12.10.79**

(86) International application number: **PCT/US79/00833**

(87) International publication number: **WO 80/00847 01.05.80 Gazette 80/10**

# (54) METHOD FOR PREPARING A COATING COMPRISING AN INTERPENETRATING POLYMER NETWORK.

(30) Priority: **23.10.78 US 953920**
**06.09.79 US 72897**

(43) Date of publication of application:
**07.01.81 Bulletin 81/01**

(45) Publication of the grant of the patent:
**14.08.85 Bulletin 85/33**

(84) Designated Contracting States:
**AT CH DE FR GB LU NL SE**

(56) References cited:
**FR-A-1 211 847**
**US-A-3 247 280**
**US-A-3 455 877**
**US-A-3 496 139**
**US-A-3 725 501**
**US-A-3 868 342**

(73) Proprietor: **AMERON, INC.**
**4700 Ramona Boulevard**
**Monterey Park California 91754 (US)**

(72) Inventor: **FOSCANTE, Raymond Eugene**
**5152 Wagon Wheel Drive**
**Yorba Linda, CA 92686 (US)**
Inventor: **GYSEGEM, Albert Peter**
**430, Rose Park Avenue**
**Monrovia, CA 91016 (US)**
Inventor: **MARTINICH, Pamela Jean**
**2276 Argonne**
**Long Beach, CA 90815 (US)**
Inventor: **LAW, Gabriel Hei-kok**
**30125 Avenida Classica**
**Rancho Palos Verdes, CA 92266 (US)**

(74) Representative: **Patentanwälte Dipl.-Ing. A. Grünecker, Dr.-Ing. H. Kinkeldey, Dr.-Ing. W. Stockmair,**
**Dr. rer. nat. K. Schumann, Dipl.-Ing. P.H. Jakob,**
**Dr. rer. nat. G. Bezold Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 020 604 B1

**Description**

This application is directed to epoxy resin coatings of improved properties. Epoxy coatings possess many properties that make them desirable for use as a coating material, particularly as a coating material for steel. For example, they adhere well to steel, have good application properties and are readily available. Epoxy coatings also have good chemical resistance to many chemicals and solvents. However, the resistance of epoxy resins to attack by some solvents, such as acetone and methanol, can be poor. The properties of an epoxy resin film depend upon the chemical nature of the cure linkage, extent of crosslinking relative to chain extension, and cross-linked density. The most important commercial cure mechanisms use aliphatic amines, aromatic amines, and carboxylic derivatives. Unfortunately, the amines and carboxylic derivatives result in cured materials which are generally sensitive to acid or hydrolytic degradation. A structural basis for the susceptibility degradation, when using an amine curing agent, is the presence of the substituted nitrogen group in the matrix which can be protonated by acid and undergo a series of degradation reactions. In the case of cure with carboxylic acid derivative, an ester linkage results. Ester groups are subject to hydrolysis catalyzed by both acid and base.

In summary, acid and hydrolytic resistance is a problem experienced in the use of epoxy resins. It is known from U.S. Patent 3,247,280 to use a combination of polyepoxy resin and amino organosilicon derivative as a coating on steel. This combination may be cured at ambient temperatures. FR Patent 1,211,847 also discloses a combination of amino organosilicon compounds and epoxy compounds in an organic diluent. In both cases the amino organosilicon reacts as a curing agent.

It is the object of the present invention to provide a method for preparing epoxy resin coatings with improved properties. This object is accomplished by a method for preparing an inter-penetrating polymer network having an epoxy network intertwined with a polysiloxane network characterised by

(a) combining a silane selected from the group consisting of aminosilane, epoxysilane, alkoxysilane, alkyltrialkoxysilane, aryltrialkoxysilane and hydrolytic polycondensation products thereof, an epoxy resin having at least two oxirane groups per molecule and at least one amino curing agent for the epoxy resin, whereby said aminosilane may be the only amino curing agent, wherein at least 0.1 equivalent weight of silane is present for each equivalent weight of epoxy resin;

(b) distributing water substantially uniformly throughout the so-obtained combination prior to applying the mixture to a substrate, in an amount sufficient to bring about substantial hydrolytic polycondensation of the silane to form a polysiloxane network and

(c) substantially simultaneously reacting the epoxy resin with the amino curing agent to form a polymerized epoxy resin network intertwined with the polysiloxane network.

The present invention provides coatings of modified epoxy polymers with improved solvent, acid, and base resistance by forming an interpenetrating polymer network (IPN) of a polymerized epoxy resin network intertwined with a polysiloxane network formed by the hydrolytic polycondensation of silane groups. This is achieved by the simultaneous polymerization, at substantially balanced reaction rates, of a combination of epoxy resin and silane groups to form the two intertwined networks extending throughout the coating. An amine curing agent forms the epoxy network, and water distributed throughout the mixture causes the hydrolytic polycondensation of the silane groups.

A preferred method for preparing the IPN is to react epoxy resin with an aminosilane capable of both hydrolytic polycondensation of the silane moiety and amine addition of the oxirane rings of the epoxy resin. The epoxy resin has at least two oxirane groups. The aminosilane curing agent contributes at least 0.1 equivalent of amine per 1 oxirane equivalent, and has the general formula

$$Y—Si—(O—X)_3$$

where each X is independently selected from the group consisting of alkyl, hydroxyalkyl, alkoxyalkyl, and hydroxyalkoxyalkyl radicals containing less than six carbon atoms, and where Y is $H[HNR]_a$, where a is an integer from 2 to 6. Each R is a difunctional radical independently selected from the group consisting of alkyl, aryl, dialkylaryl, alkoxyalkyl and cycloalkyl radicals, and R can vary within a Y. Preferably, Y is $H[HN(CH_2)_b]_a$, where a is an integer from 1 to 10, and b is an integer from 1 to 6.

To produce an IPN in accordance with this invention, the cure rates of the epoxy resin and silane groups must be relatively balanced. If either group cures too fast relative to the other, "domaining" occurs, causing unacceptable discontinuities in the final coating. Thus, the chemical and physical properties of the final IPN are strongly affected by the relative rates of epoxy resin curing and hydrolytic polycondensation of the silane. Since polysiloxane formation requires water, the epoxy polymerization would predominate if water were not substantially uniformly distributed throughout the mixture as the epoxy curing begins. Accordingly, in the presently preferred form of the invention, the combination of the epoxy resin, amino curing agent, and silane groups includes agents with a good affinity for water, such as amines, aldehydes, alcohols, ethers, and ketones having less than nine carbon atoms, and which are miscible with the unpolymerized epoxy and silane compounds. In general, compounds with suitable affinity for water contain from one to eight carbon atoms and ether, carbonyl, oxygen-hydrogen, or nitrogen-hydrogen linkages.

The selection of solvents affects the relative rates of reaction. Hydrocarbon solvents, which have no affinity for water, have little effect beyond increasing monomer mobility and reducing the monomer

concentration. Alcohol solvents best catalyze the epoxy-amine reaction, but also absorb water present in the mixture to facilitate the distribution and availability of water for condensation of silane groups.

A more complex situation arises when ketone solvents are used. Ketones react reversibly with primary amines to form ketimines and water. In the presence of hydrolyzable silanes, the water so formed irreversibly reacts to hydrolytically polycondense the silane groups. The ketimine formed will not react with the oxirane groups of the epoxy resins or of epoxysilanes, and remains in the ketimine form until additional water is available to reverse the reaction. This additional water can be added initially or be absorbed from the environment. Since only primary amines react to form ketimines, any secondary amine group present, either on the aminosilane or other amine curing agent, reacts with the oxirane groups. However, without the availability of the primary amines, the rate of the epoxy-amine reaction is slowed overall and limited by moisture absorption from the environment. Since the hydrolysis of the silane by the water from ketimine formation accelerates the formation of the polysiloxane portion of the IPN, judicious choice of solvents or no solvent permits the relative polymerization rates of the epoxy and silane groups to be balanced to form IPNs with solvent resistance superior to that of other epoxy base coatings.

Other factors influence the relative rates for the epoxy curing and the polysiloxane formation. For example, in a neutral pH, hydrolytic polycondensation of the silane groups proceeds so slowly as to be unusable in most applications. In acidic or basic media, however, the reaction proceeds more rapidly. In the preferred methods for forming the IPN of this invention, at least one of the epoxy curing agents contains amine functionality. This makes the system basic and facilitates the hydrolysis and polycondensation of the silane. In the case of aminosilane, the juxtaposition of the catalytic amine portion of the molecule and the hydrolyzable silane portion of the molecule produces an efficient self-catalytic silane. Epoxy catalysts, such as alcohols, phenols, and tertiary amines, preferentially accelerate the epoxy curing reactions.

The epoxy curing reaction rates increase with temperature. The rate of hydrolytic polycondensation of silane groups changes little with temperature. However, increased temperature facilitates diffusion and evaporation of the alcohol formed, thereby increasing the rate of hydrolytic polycondensation.

Another preferred method for preparing the IPN of this invention is to use an epoxy functional silane in combination with the epoxy resin and the water, and cure the mixture with conventional curing agents, such as polyamines. Epoxy polymer formation in this method includes both the reaction between the epoxy resin and the amine and the reaction of the epoxysilane with the amine. In the latter case, the epoxysilane-amine reaction product is essentially the same as the epoxy-aminosilane of the above method. The relative reaction rates in the final IPN are essentially identical to that of the method utilizing aminosilane as the source of silane. In this second preferred method, the epoxy resin comprises up to 80 molar percent of epoxy resin having at least two oxirane groups, and at least 20 molar percent of at least one epoxysilane of the formula:

$$Z—Si—(O—X)_3$$

where X is defined as above and where Z is an alkyl or oxyalkyl containing from 2 to 8 carbon atoms and at least one oxirane group.

The source of silane may be any of the well known aminosilane, epoxysilane, alkoxysilane, alkyltrialkoxysilane, aryltrialkoxysilane and hydrolytic polycondensation products thereof. The epoxy resin may be cured by ordinary amine curing agents, aminosilane, or combinations of ordinary curing agents and aminosilane.

Fillers may also be used to balance the cure rates of the epoxy and silane groups. A filler may act as a carrier of water to facilitate the curing of silane groups, and to provide an escape for the alcohol formed as the silane groups condense. Examples of useful fillers are talc (magnesium silicate), silicate powder, alumina, carbon black, china clay (aluminum silicate), steel chips, magnesium zinc dust for corrosion resistance of steel surfaces, steel filings, aluminum flake, calcium carbonate, thixotropic agents, Wollastonite (calcium silicate), fibrous fillers (such as asbestos and chopped glass), barytes (barium sulfate), barium metaborate, and various other fillers commonly employed in combination with epoxy resins.

Fig. 1 graphically compares percentage weight loss upon heating of an epoxy resin cured with aliphatic amine versus the same epoxy resin cured with aminosilane in accordance with the present invention.

Fig. 2 graphically compares the solvent effects on the simultaneous reactions occurring during IPN formation in a film.

The present invention provides unique polymeric structures having interpenetrating matrices in cured form. These interpenetrating polymeric matrices are comprised of intertwined epoxy-polyamine and polysiloxane networks. The resulting structure has physical and chemical properties much improved over those of either polymeric component alone. Interpenetrating networks are described in some detail by C. H. Sperling, "Application of Group Theory Concepts to Polymer Blends, Grafts, and IPN's", Advances in Chemistry, Series No. 154, American Chemical Society, Washington, D.C., 1976, pp. 159—178.

Three methods are described herein for producing the interpenetrating network of epoxy polymer and polysiloxane. The first method involves the substantially simultaneous curing of an epoxy resin combined with a silane, and the hydrolytic polycondensation of the silane with water substantially uniformly distributed throughout the combination prior to applying the mixture to a substrate. The substantially

simultaneous reactions form intertwined epoxy-polyamine and polysiloxane networks. The second method involves substitution of an aminosilane for all or part of the amine curing agent. The third method involves the substitution of an aminosilane or an epoxysilane as sources of the silane in the invention. These three methods are described in detail below.

The epoxy resin suitable for use in the present invention has at least two oxirane groups, i.e., at least two

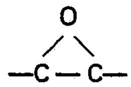

groups. Polyepoxides which can be used in the present invention are described in U.S. Patent 3,183,198 column 3, line 27 through column 4, line 64. The epoxy resin used can also contain some monomer units having only one oxirane group.

However, only a small portion of these can be tolerated without adversely affecting the properties of the product interpenetrating network. A blend of different monomer types can also be used.

The first method for the preparation of the interpenetrating network involves the substantially simultaneous steps of curing an epoxy resin and effecting hydrolytic polycondensation of silane groups. The epoxy resin has at least two oxirane groups per molecule, and is reacted with an amino curing agent of the general formula:

$$H(HNR)_aNH_2$$

where a is an integer from one to six, each R is a difunctional radical independently selected from a group consisting of alkyl, aryl, dialkylaryl, alkoxyalkyl, and cycloalkyl radicals, and R may vary within the amine curing agent. The silane is combined with the epoxy resin and is selected from the group consisting of alkoxysilane, alkyltrialkoxysilane, aryltrialkoxysilane, and hydrolytic polycondensation products thereof. Water is substantially uniformly distributed throughout the combination of epoxy, epoxy curing agent, and silane prior to applying the mixture to a substrate in an amount sufficient to bring about substantial hydrolytic polycondensation of the silane to form intertwined epoxy-polyamine and polysiloxane networks.

In the second method of producing the interpenetrating polymer networks, an aminosilane is substituted for all or part of the requisite amine curing agent of the general formula above. The general formula of the group of permissible aminosilanes is:

$$Y{-}Si{-}(O{-}X)_3$$

where Y is $H[HNR]_a$, where a is an integer from two to six, each R is a difunctional organic radical independently selected from the group consisting of alkyl, aryl, dialkylaryl, alkoxyalkyl, and cycloalkyl radicals, and R can vary within a Y.

Each X can be the same or different, and is limited to alkyl, hydroxyalkyl, alkoxyalkyl, and hydroxyalkoxyalkyl groups containing less than six carbon atoms so that the alcohol analogue of X (X—OH) formed during hydrolysis of the silane has sufficient volatility to evaporate, thus allowing the film to cure. Generally, the higher the molecular weight of X, the lower the volatility of its alcohol analogue. Examples of the groups from which X can be selected are the methyl, ethyl, n-propyl, isopropyl, n-butyl, isobutyl, hydroxymethyl, hydroxypropyl, methyloxymethyl, methyloxyethyl, hydroxyethyloxyethyl, and the like. Preferably, X is selected from the methyl or ethyl groups when rapid curing of the coating is desired. However, under certain conditions, such as coating interior surfaces under high temperature operating conditions, when low volatility is required, X can be a higher molecular weight group, such as methoxyethyl or ethoxyethyl.

Table 1 presents examples of aminosilanes which can be used for curing epoxy resins in accordance with the present invention to form an IPN comprising epoxy polymer and polysiloxane.

TABLE 1

Aminosilanes

| STRUCTURE | NAME | COMMERCIAL NAME |
|---|---|---|
| $NH_2(CH_2)_3Si(OC_2H_5)_3$ | 3-Aminopropyl-triethoxysilane | A—1100 Union Carbide |
| $NH_2(CH_2)_3Si(OCH_3)_3$ | 3-Aminopropyl-trimethoxysilane | A—1110 Union Carbide |
| $NH_2(CH_2)_2NH(CH_2)_2NH-$<br>$(CH_2)_2NH(CH_2)_3Si(OMe)_3$ | N-(N-(N-(2-aminoethyl)-2-aminoethyl)-2-amino-ethyl)-3-aminopropyl-trimethoxysilane | Not commercially available |
| 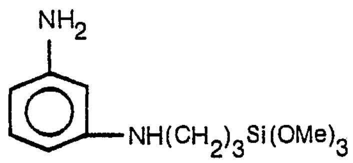 | N-(3-aminophenyl)-3-amino-propyltrimethoxysilane | Not commercially available |
| 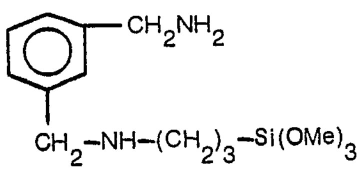 | N-(3-aminomethylphenyl-methyl)-3-aminopropyl-trimethoxysilane | Not commercially available |
| $H_2N(CH_2)_2NH(CH_2)_3Si(OCH_3)_3$ | N-(2-aminoethyl)-3-amino-propyltrimethoxysilane | A—1120 Union Carbide |

In addition to the aminosilanes, other conventional curing agents, such as aliphatic amines or mercaptans, can be used for curing epoxy resin. Likewise, if acceleration is required, accelerators or catalysts, such as alcohols or phenols, can be used. However, use of such catalysts and accelerators is not necessary, because it is found that IPN's prepared as described herein cure at ambient and room temperatures without the use of such catalysts and accelerators. Preferably, only aminosilane curing agent is used to maximize cross-link density and optimize physical and mechanical properties of the cured film.

In the third method of producing the interpenetrating networks, aminosilanes or epoxysilanes are the source of all or part of the silane required to produce the interpenetrating network. The general formula of the permissible group of aminosilanes is set out above. The general formula for the permissible group of epoxysilanes is:

$$Z—Si—(O—X)_3$$

where Z is an alkyl or oxyalkyl group containing from two to eight carbon atoms and at least one oxirane group, and where X is defined as above. According to the invention, the total requirement of silane may be satisfied by an aminosilane, epoxysilane, or a silane selected form the group specified in the first method above. Furthermore, a combination of any or all of these silanes, epoxysilane, and aminosilane may be utilized in this invention. In a preferred method, an epoxysilane of the above general formula comprises at least 20 molar percent of the total epoxy resin.

We have found that at least 0.1 equivalent weight of silane per epoxy resin equivalent weight must be used to achieve IPN formation. If less than 0.1 is used, the silane is not present in sufficient amount to form the siloxane network needed in the IPN of this invention.

In all methods of preparing the interpenetrating polymer network, the proportion of amine curing agent to epoxy resin can vary widely whether the amine is of the general formula above, or an aminosilane or any combination thereof. In general, the epoxy resin is cured with sufficient amine and aminosilane

curing agent to provide from 0.5 to about 1.2 amine equivalent weight per epoxide equivalent weight, and preferably the ratio is 1:1.

It is sometimes desirable to add a filler to the IPN's prepared according to the above methods. The filler is usually required to prevent domaining when the epoxy resin has a relatively low molecular weight.

Among the fillers useful in the practice of this invention are talc (magnesium silicate), silicate powder, alumina, carbon black, china clay (aluminum silicate), steel chips, magnesium zinc dust for corrosion resistance of steel surfaces, steel filings, aluminum flake, calcium carbonate, thixotropic agents, Wollastonite (calcium silicate), fibrous fillers (such as asbestos and chopped glass), barytes (barium sulfate), barium metaborate, and various other fillers commonly employed in combination with epoxy resins. Pigments such as iron oxide, titanium dioxide, and chrome green can also be used. Organic pigments, such as hansa yellow, phthalo green, and phthalo blue may also be used to color the product.

When a coating exhibiting resistance to high temperatures is desired, a finely divided particulate pigment or filler can be used. Examples of fillers providing high heat resistance are barytes (barium sulfate), mica, micaceous iron oxide, aluminum flake, glass flake or stainless steel flake. By a proper selection of the binder and filler, heat-stable coatings resistant to temperatures around 300°C can be achieved.

Pigment volume concentrations (PVC) of from 20 to 50 percent result in a coating with satisfactory mechanical properties. Pigment volume concentration is the volume of filler divided by the volume of filler plus the volume of resin used for making the coating. The exact PVC will depend upon the type of filler used, its density, desired solvent, acid and base resistance properties, etc.

The use of such fillers is desirable for balancing the cure rates of the epoxy resin and the cure rates of the silane groups. If either the epoxy resin or the silane groups cure too fast, visible domaining can occur where little, if any, interpenetration of polymer networks occurs. Visible domains are defined here as discontinuities in a coating which are visible to the naked eye. When such domaining occurs, lower solvent resistance is realized. The use of fillers facilitates diffusion of the X—OH groups formed by the hydrolysis of the silane groups and release of the X—OH groups to the atmosphere. The fillers can also carry adsorbed water, and thus supply water throughout the mixture as needed for silane polymerization to produce proper intertwining of the two networks.

According to the process of the invention, coating compositions containing the IPN's precursors can be applied to a surface to be treated by conventional techniques such as spraying or brushing. If desired, the applied coating can be heated or exposed in the form of a spray or thin film to a source of moisture for rapid curing, say, when a ketone solvent is used to react with the amine curing agent to produce temporarily a ketimine and water, which causes condensation of silane groups. The coating can be applied to new construction and over inorganic primers, including those containing anti-corrosion pigments, such as metallic zinc.

The components of the coating of this invention are supplied in a two-package system. One package contains the amine curing agent, which can include aminosilane and any accelerating agent if desired. Some solvent can be included with the curing agent. The other package contains the epoxy resin which may optionally include epoxysilane, solvent and fillers. Both containers should moisture-proof.

The IPN of the present invention can be applied as a coating having a thickness ranging from 0.13 mm up to 0.51 mm in thickness. Generally, the thicker the coating, the more resistant it is to attack by chemicals, solvents, heat, and weather. If necessary, multiple layers can be applied to the surface to be protected. The preferred dry film thickness is from 0.07 mm to 0.25 mm for convenient drying and curing properties.

The isolated reactions of IPN formation are as follows:

1. 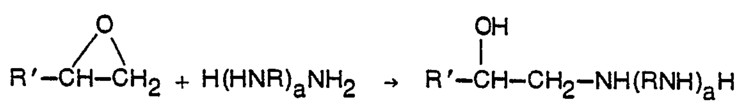

epoxy resin + amine curing agent → cured epoxy

2. 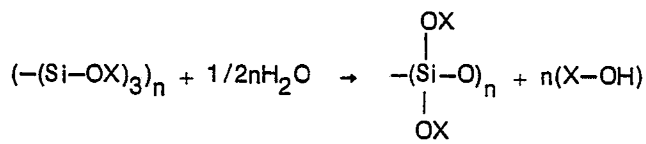

silane + water → polysiloxane + alcohol

Reactions 1 and 2 occur essentially simultaneously. In reaction 1, an epoxy resin is cured with an amine curing agent to form cured epoxy polymer. The epoxy resins are selected from the group defined above, and the general formula for the amine curing agent is also defined above. Where epoxysilane is optionally utilized, the oxirane moiety of the epoxysilane also undergoes epoxy-amine addition of reaction 1. In reaction 2, silane groups undergo hydrolytic polycondensation to form a polysiloxane and an alcohol. The permissible groups from which the silane may be selected are set out above. Additionally, aminosilane and epoxysilane may substitute for some or all of the silane. The general formulas are defined for both aminosilane and epoxysilane above.

The hydrolysis of the silane requires water substantially uniformly distributed throughout the mixture of reactants in reactions 1 and 2 to obtain the IPN of this invention. The chemical and physical properties of the final IPN are affected by the relative rates of reactions 1 and 2. Reaction 2 depends directly on the water content of the mixture. Since absorption from the environment is slow relative to reaction 1, formation of the organic epoxy polymer would predominate over formation of the inorganic polysiloxane, if only water absorbed from the atmosphere were available. Accordingly, the mixture used to form the IPN of this invention includes water distributed substantially uniformly throughout the mixture prior to applying the mixture to a substrate. For example, a water-miscible solvent compatible with the other components may provide the water needed for reaction 2. The alcohols, aldehydes, amines, ethers, and ketones having less than nine carbon atoms are good agents for distributing water throughout the mixture.

A preferred method for ensuring sufficient water being substantially uniformly distributed throughout the reaction mixture uses a ketone solvent. Preferably, the epoxy resins are dissolved in a ketone selected from the group consisting of acetone, methyl ethyl ketone, methyl propyl ketone, diethyl ketone, 2-hexanone, and 3-hexanone. Ketones react reversibly with primary amines as follows:

$$3. \quad R'_2C{=}O + H(HNR)_aNH_2 \rightleftarrows R'_2C{=}N(RNH)_aH + H_2O$$

ketone + amine curing agent → ketimine + water

In the presence of hydrolyzable silanes, the water formed in reaction 3 is rapidly and irreversibly reacted with some of the silane according to reaction 2. Although the secondary amine groups are not affected by the ketone and, therefore, remain free to react with oxirane groups, the ketimine formed in reaction 3 will not react with the oxirane groups of epoxy resins or of epoxysilanes and will remain in ketimine form until additional water is introduced to reverse reaction 3. This water can be added initially or can be absorbed from the environment. Since only primary amines react to form ketimines, any secondary amine groups present, either on the aminosilane or the amine curing agent, can react with the oxirane groups. However, without the availability of primary amines, the rate of epoxy-amine reaction is slowed overall and limited by moisture absorption from the environment so the unreacted oxirane and silane groups complete the polymerization at substantially balanced rates.

Another method of ensuring adequate water for the hydrolytic polycondensation of the silanes is to use it in a solvent for the epoxy resins consisting of a ketone selected from the group above and an alcohol selected from the alcohols having less than six carbon atoms. Examples of such alcohols are methanol, ethanol, propanol, isopropanol, n-butanol, isobutanol, sec-butanol, tert-butanol, amyl alcohol, and tert-amyl alcohol. Methyl, ethyl, and butyl Cellosolve may also be used. Cellosolve is Union Carbide's trademark for mono- and dialkyl ethers of ethylene glycol and their derivatives, widely used as industrial solvents. Methyl Cellosolve, for example, has the formula, $H_3C{-}O{-}CH_2{-}CH_2{-}OH$. Preferably, the ratio of alcohol to ketone is at least 1:1 by weight. The epoxy resin may also be dissolved in a mixture of xylene and alcohol, the alcohol being selected from the group set out above.

Preferably, the ratio of alcohol to xylene is 1:1 by weight. When alcohol is used with either xylene or a ketone as the epoxy resin solvent, sufficient water is added to the solvent to ensure substantially uniform distribution of water throughout the reaction mixture. Therefore, judicious choice of solvents, or no solvent, affects the chemical and physical properties of the IPN.

The interpenetrating polymer networks of the present invention have substantial advantages over conventional epoxy polymers. Our IPN has better acid and solvent resistance than the corresponding unmodified epoxy polymer. The IPNs can be prepared as thin films at ambient temperature by any of the methods described herein. Coatings containing the IPNs of the present invention, because of high cross-link density obtained in the presence of the polysiloxane, exhibit superior thermal stability, greater chemical and solvent resistance, and higher acid resistance than coatings containing the corresponding epoxy polymer. Coatings containing the interpenetrating polymer network are resistant to attack by strong solvents, such as acetone, methanol, and low-molecular weight amines.

The coating formulations presented herein cure at ambient temperature, and provide corrosion, chemical, solvent, weathering, and heat resistance. Examples of surfaces on which these compositions can be used are steel structures of chemical processing plants, oil refineries, coal-fired power plants, and offshore drilling platforms. Additionally, internal surfaces of tanks of petroleum tankers carrying crude oil or refined oil products, such as fuel oil, lube oil, kerosene, gasoline, jet fuel, and the like, and internal surfaces of tanks used in transport varieties of both chemicals, can be coated with this invention.

These and other features of the present invention will become more apparent upon consideration of the following examples.

The abbreviations used in the examples are explained as follows:

| | |
|---|---|
| DER 671® | = solution of 25% methyl ethyl ketone and 75% of an epoxy resin, by weight |
| Bentone® | = amine-treated montmorillonite clay |
| SR 191® | = silicon intermediate resin having a molecular weight between 500 and 600 and having 15% methoxy groups by weight |
| A—1120® | = N-(2-aminoethyl)-3-amino-propyltrimethoxysilane |

Comparative Example

A conventional epoxy resin cured with an aliphatic amine was made by mixing 14 grams of DER 671 epoxy resin with the stoichiometric amount (0.4 grams) of diethylene triamine (DETA) to produce an epoxy resin stoichiometrically cured with the aliphatic amine. The epoxy resin has an epoxy equivalent weight of 450—550. The mixture was sprayed and allowed to cure under ambient conditions to form a coating having a thickness of 0.25 mm.

Example 1

An IPN was made in accordance with this invention by mixing 14 grams of DER 671 with the stoichiometric amount (1.48 grams) of N-(2-aminoethyl)-3-aminopropyltrimethoxysilane. The mixture was sprayed and cured under ambient conditions to a solid about 0.25 mm thick, and having the IPN characteristic of this invention.

The thermal stability of the coatings made in accordance with the Comparative Example and Example 1 was determined using thermal gravimetric analysis in which the coatings were slowly heated from 100°C to 500°C under identical conditions. The results are presented in FIG. 1, which shows that the IPN prepared according to the present invention (Example 1) had higher thermal stability than the corresponding conventional epoxy polymer (Comparative Example).

Example 2A

An IPN was made in accordance with this invention by mixing and spraying the following ingredients to form a cured coating having a thickness of 0.25 mm.

| Ingredient | Parts by Weight |
|---|---|
| DER 671 epoxy resin | 14.0 |
| N-(2-aminoethyl)-3-aminopropyltrimethoxysilane | 1.48 |
| China clay (filler) | 10.0 |
| SR 191 silicone intermediate resin | 1.0 |
| Titanium dioxide | 2.0 |
| Bentone (0.5 grams of Bentone in 4.5 grams of xylol) | 5.0 |
| Methyl ethyl ketone | 10.0 |

A film coating was formed by spraying the mixture of Example 2A, and permitting it to cure under ambient conditions to a final thickness of 0.25 mm. The film had good resistance to solvents, such as methanol and acetone.

Example 2B

An IPN was made in accordance with this invention exactly as described above for Example 2A, except that the 10 grams of methyl ethyl ketone were replaced by 10 grams of ethanol. A coating was formed by spraying and curing under ambient conditions as described above. This coating also had good resistance to solvents, such as methanol and acetone.

Example 2C

A coating was made as described above for Example 2A, except that sufficient water was added to the mixture so that the added water, plus the water released by the ketimine formed when the methyl ethyl ketone reacted with the amine curing agent, was equal to the stoichiometric amount of water required to hydrolyze all of the siloxane groups in the reaction mixture. The coating formed in accordance with this Example 2C cured slowly and did not have as good solvent resistance to methanol and acetone as the coatings made in accordance with Examples 2A and 2B.

FIG. 2 shows the hardness developed by the coatings made in accordance with Examples 2A, 2B and 2C as a function of time. The coating of Example 2A cured the fastest, reaching its maximum hardness within about four days. The coating of Example 2B cured more slowly, reaching a plateau of lesser hardness than Example 2B within about three days, and thereafter showing slightly increased hardness by the seventh day. Example 2C cured the slowest of the three, having a hardness at the end of eight days substantially below that of Examples 2A and 2B.

A comparison of the curves shown in FIG. 2 show how solvents used in the mixture to prepare the IPNs of this invention affect the simultaneous reactions required to form the intertwined networks of epoxy and polysiloxane. Alcohols are known to catalyze the epoxy-amine cure reaction to a greater extent than does ketone alone. Consequently, if only the epoxy reaction were taking place, one would expect to see an increase in the cure rate in the alcohol-ketone system (Example 2B) as compared to the pure ketone solvent (Example 2A). However, because an IPN is being formed, the alcohol causes a slower cure rate than when it is omitted. This may be due to the fact that alcohol as a solvent does not react with the primary amine groups of the curing agent to produce ketimine and water. Therefore, while the epoxy reaction may be slightly catalyzed by the alcohol, the silane reaction rate is probably decreased because of less water being available from the ketimine reaction in Example 2B as compared to Example 2A.

The slow curing rate of Example 2C is probably due to the fact that the stoichiometric amount of water initially present rapidly hydrolyzes the siloxane groups at a rate greater than the reaction of the ketone-modified amine causes curing of the oxirane groups in the epoxy resin. Thus, early polycondensation of the silane groups may sterically hinder the amine-epoxy reaction, causing slow film cure at ambient temperature.

Following Examples 3A and 3B are preferred coating formulations for applying IPN's of this invention to internal surfaces of tanks of petroleum tankers. The formulations of Examples 3A and 3B have pigment volume concentrations of 38 and 36%, respectively.

Example 3A

| Ingredient | Parts by Weight |
|---|---|
| DER 671 | 14.0 |
| SR 191 silicone intermediate resin | 1.0 |
| China Clay | 12.0 |
| Titanium Dioxide | 2.0 |
| Bentone 0.5 g + xylol 10 g | 5.0 |
| A—1120 | 1.48 |

Example 3B

| Ingredient | Parts by Weight |
|---|---|
| DER 671 | 14.0 |
| SR 191 silicone intermediate resin | 2.0 |
| Bentone 0.5 g + xylol 10 g | 5.0 |
| China Clay | 10.0 |
| Titanium dioxide | 2.0 |
| A—1120 | 1.48 |

Although the present invention has been described with considerable detail with reference to certain preferred variations thereof, it should not be construed as being limited thereby.

**Claims**

1. A method for preparing a coating comprising an interpenetrating polymer network having an epoxy network intertwined with a polysiloxane network characterized by

(a) combining a silane selected from the group consisting of aminosilane, epoxysilane, alkoxysilane, alkyltrialkoxysilane, aryltrialkoxysilane and hydrolytic polycondensation products thereof, an epoxy resin having at least two oxirane groups per molecule and at least one amino curing agent for the epoxy resin, whereby said aminosilane may be the only amino curing agent, wherein at least 0.1 equivalent weight of silane is present for each equivalent weight of epoxy resin;

(b) distributing water substantially uniformly throughout the so-obtained combination, prior to applying the mixture to a substrate, in an amount sufficient to bring about substantial hydrolytic polycondensation of the silane to form a polysiloxane network and

(c) substantially simultaneously reacting the epoxy resin with the amino curing agent to form a polymerized epoxy resin network intertwined with the polysiloxane network.

2. The method of claim 1, characterised in that a carbon-containing compound with less than nine carbon atoms and which contains a linkage selected from the group consisting of oxygen-hydrogen, nitrogen-hydrogen, ether, and carbonyl is additionally present in the mixture.

3. The method of claim 1, characterised in that the epoxy resin is cured with sufficient amine curing agent to provide from 0.5 to about 1.2 equivalent weight of amine for each equivalent weight of epoxy resin.

4. The method of claim 3, characterised in that about one equivalent weight of amine is present for each epoxy resin equivalent weight.

5. The method of claim 1, characterised in that the silane is a trimethoxysilane.

6. The method of claim 1, characterised in that the epoxypolysiloxane interpenetrating polymer network is formed in the presence of sufficient filler to avoid the formation of visible domains.

7. The method of claim 6, characterised in that the pigment volume concentration of the filler is from 20 to 50%.

8. The method of claim 1, characterised in that a coating having a thickness from 0.13 mm to 0.51 mm is prepared by spraying the mixture.

9. The method of claim 1, characterised in that the epoxy resin is dissolved in a ketone solvent which reversibly reacts with the amine curing agent to form a ketimine and water for the hydrolytic polycondensation of the silane.

10. The method of claim 9, characterised in that the ketone solvent is selected from the group consisting of acetone, methyl ethyl ketone, methyl propyl ketone, diethyl ketone, 2-hexanone, and 3-hexanone.

11. The method of claim 9, characterised in that it includes exposing the mixture to water in the atmosphere to hydrolyze the ketimine to ketone and amine curing agent.

12. The method of claim 1, characterised in that the epoxy resin is dissolved in a mixture of xylene and alcohol.

13. The method of claim 12, characterized in that the alcohol is selected from the group consisting of methanol, ethanol, propanol, isopropanol, n-butanol, isobutanol, sec-butanol, and tert-butanol.

14. The method of claim 12 or 13, characterized in that the ratio of alcohol to xylene is at least 1:1 by weight.

15. The method of claim 1, characterized in that the epoxy resin is dissolved in a mixture of a ketone and alcohol.

16. The method of claim 15, characterized in that the ketone is selected from the group consisting of acetone, methyl ethyl ketone, methyl propyl ketone, diethyl ketone, 2-hexanone, and 3-hexanone.

17. The method of claim 15, characterized in that the ratio of the alcohol to the ketone is at least 1:1 by weight.

18. The method of claim 1, characterized in that the amine curing agent includes an aminosilane of the general formula:

$$Y\text{—}Si\text{—}[O\text{—}X]_3$$

where each

X is independently selected from the group consisting of alkyl, hydroxyalkyl, alkoxyalkyl, and hydroxyalkoxyalkyl radicals containing less than six carbon atoms, and where

Y is $H\text{—}[HNR]_a\text{—}$, in which

a is an integer from 2 to 6, and each

R is a difunctional radical independently selected from the group consisting of alkyl, aryl, dialkylaryl, alkoxyalkyl, and cycloalkyl radicals, and R may vary within a Y.

19. The method of claim 18, characterized in that Y is $H[HN(CH_2)_b]_a\text{—}$, where

a is an integer from 1 to 10, and

b is an integer from 1 to 6, and b may vary within a given molecule.

20. The method of claim 1, characterized in that the silane is selected from the group consisting of aminosilanes and epoxysilanes, the aminosilanes having the general formula of claim 18, and the epoxysilanes having the general formula

$$Z—Si—[O—X]_3$$

where

X is defined above in claim 18, and where

Z is an alkyl or oxyalkyl group containing from 2 to 8 carbon atoms and at least one oxirane group.

21. The method of claim 20, characterized in that the ratio of total silane equivalents to oxirane equivalents is at least 1:1.

22. The method of claim 20, characterized in that the source of silane is a mixture of an aminosilane, an epoxysilane, and other silanes selected from the group consisting of alkoxysilanes, alkyltrialkoxysilanes, aryltrialkoxysilanes, and hydrolytic polycondensation products thereof.

**Patentansprüche**

1. Verfahren zur Herstellung einer Beschichtung, umfassend ein sich gegenseitig durchdringendes Polymernetzwerk bzw. eine Vernetzung mit einem Epoxidnetzwerk, das mit einem Polysiloxannetzwerk verschlungen ist, gekennzeichnet, durch

(a) Kombinieren eines Silans, gewählt aus der Gruppe, bestehend aus Aminosilan, Epoxysilan, Alkoxysilan, Alkyltrialkoxysilan, Aryltrialkoxysilan und hydrolytischen Polykondensations-produkten davon, eines Epoxidharzes mit wenigstens zwei Oxirangruppen pro Molekül und wenigstens eines Aminoaushärtungsmittels für das Epoxidharz, wobei das Aminosilan das einzige Aminoaushärtungsmittel sein kann, worin wenigstens 0,1 Äquivalentgewicht Silan für jedes Äquivalentgewicht Epoxidharz vorhanden ist;

(b) im wesentlichen gleichmäßiges Verteilen von Wasser in der so erhaltenen Kombination vor dem Aufbringen der Mischung auf ein Substrat in einer Menge, die ausreichend ist, um eine wesentliche hydrolytische Polykondensation des Silans zur Bildung eines Polysiloxannetzwerks herbeizuführen, und

(c) im wesentlichen gleichzeitiges Umsetzen des Epoxidharzes mit dem Aminoaushärtungsmittel, um ein polymerisiertes Epoxidharznetzwerk, das mit dem Polysiloxannetzwerk verschlungen ist, zu bilden.

2. Verfahren nach Anspruch 1, dadurch gekennzeichnet, daß eine Kohlenstoff enthaltende Verbindung mit weniger als 9 Kohlenstoffatomen und welche eine Bindung, gewählt aus der Gruppe, bestehend aus Sauerstoff-Wasserstoff, Stickstoff-Wasserstoff, Ether und Carbonyl, enthält, zusätzlich in der Mischung vorhanden ist.

3. Verfahren nach Anspruch 1, dadurch gekennzeichnet, daß das Epoxidharz mit ausreichend Aminaushärtungsmittel ausgehärtet wird, um 0,5 bis etwa 1,2 Äquivalentgewicht Amin für jedes Äquivalentgewicht Epoxidharz zur Verfügung zu stellen.

4. Verfahren nach Anspruch 3, dadurch gekennzeichnet, daß etwa 1 Äquivalentgewicht Amin für jedes Epoxidharz-Äquivalentgewicht vorhanden ist.

5. Verfahren nach Anspruch 1, dadurch gekennzeichnet, daß das Silan ein Trimethoxysilan ist.

6. Verfahren nach Anspruch 1, dadurch gekennzeichnet, daß das sich gegenseitig durchdringende Polymernetzwerk aus Epoxypolysiloxan in Gegenwart von ausreichend Füllstoff gebildet wird, um die Bildung von sichtbaren Bereichen bzw. Domänen zu vermeiden.

7. Verfahren nach Anspruch 6, dadurch gekennzeichnet, daß die Pigmentvolumenkonzentration des Füllstoffes 20 bis 50% beträgt.

8. Verfahren nach Anspruch 1, dadurch gekennzeichnet, daß eine Beschichtung mit einer Dicke von 0,13 mm bis 0,51 mm durch Aufspritzen bzw. Sprühen der Mischung hergestellt wird.

9. Verfahren nach Anspruch 1, dadurch gekennzeichnet, daß das Epoxidharz in einem Ketonlösungsmittel, welches reversibel mit dem Aminaushärtungsmittel reagiert, um ein Ketimin und Wasser für die hydrolytische Polykondensation des Silans zu bilden, gelöst wird.

10. Verfahren nach Anspruch 9, dadurch gekennzeichnet, daß das Ketonlösungsmittel aus der Gruppe, bestehend aus Aceton, Methylethylketon, Methylpropylketon, Diethylketon, 2-Hexanon und 3-Hexanon, gewählt wird.

11. Verfahren nach Anspruch 9, dadurch gekennzeichnet, daß die Mischung Wasser in der Atmosphäre ausgesetzt wird, um das Ketimin zu Keton und Aminaushärtungsmittel zu hydrolisieren.

12. Verfahren nach Anspruch 1, dadurch gekennzeichnet, daß das Epoxidharz in einer Mischung aus Xylol und Alkohol gelöst wird.

13. Verfahren nach Anspruch 12, dadurch gekennzeichnet, daß der Alkohol aus der Gruppe, bestehend aus Methanol, Ethanol, Propanol, Isopropanol, n-Butanol, Isobutanol, sek-Butanol und tert-Butanol, gewählt wird.

14. Verfahren nach Anspruch 12 oder 13, dadurch gekennzeichnet, daß das Gewichtsverhältnis des Alkohols zu Xylol wenigstens 1:1 beträgt.

15. Verfahren nach Anspruch 1, dadurch gekennzeichnet, daß das Epoxidharz in einer Mischung aus einem Keton und Alkohol gelöst wird.

16. Verfahren nach Anspruch 15, dadurch gekennzeichnet, daß das Keton aus der Gruppe, bestehend aus Aceton, Methylethylketon, Methylpropylketon, Diethylketon, 2-Hexanon und 3-Hexanon, gewählt wird.

17. Verfahren nach Anspruch 15, dadurch gekennzeichnet, daß das Gewichtsverhältnis des Alkohols zu dem Keton wenigstens 1:1 beträgt.

18. Verfahren nach Anspruch 1, dadurch gekennzeichnet, daß das Aminaushärtungsmittel ein Aminosilan der allgemeinen Formel

$$Y-Si-[O-X]_3$$

einschließt,
worin jedes

X unabhängig voneinander aus der Gruppe, bestehend aus Alkyl-, Hydroxyalkyl-, Alkoxyalkyl- und Hydroxyalkoxyalkyl-Radikalen, enthaltend weniger als 6 Kohlenstoffatome, gewählt wird und worin

Y $H-[HNR]_a$ ist, worin

a eine ganze Zahl von 2 bis 6 ist und jedes

R ein difunktionelles Radikal, unabhängig gewählt aus der Gruppe, bestehend aus Alkyl-, Aryl-, Dialkylaryl-, Alkoxyalkyl- und Cycloalkyl-Radikalen, ist, und R kann innerhalb eines Y variieren.

19. Verfahren nach Anspruch 18, dadurch gekennzeichnet, daß Y $H[HN(CH_2)_b]_a$ ist, worin

a eine ganze Zahl von 1 bis 10 ist und

b eine ganze Zahl von 1 bis 6 ist und b innerhalb eines gegebenen Moleküls variieren kann.

20. Verfahren nach Anspruch 1, dadurch gekennzeichnet, daß das Silan aus der Gruppe, bestehend aus Aminosilanen und Epoxysilanen, gewählt wird, wobei die Aminosilane die allgemeine Formel nach Anspruch 18 besitzen und die Epoxysilane die allgemeine Formel

$$Z-Si-[O-X]_3$$

besitzen,

worin

X die in Anspruch 18 angegebene Bedeutung besitzt und worin

Z eine Alkyl- oder Oxyalkylgruppe, enthaltend 2 bis 8 Kohlenstoffatome und wenigstens eine Oxirangruppe, ist.

21. Verfahren nach Anspruch 20, dadurch gekennzeichnet, daß das Verhältnis der Gesamtsilanäquivalente zu den Oxiranäquivalenten wenigstens 1:1 beträgt.

22. Verfahren nach Anspruch 20, dadurch gekennzeichnet, daß die Silanquelle eine Mischung eines Aminosilans, eines Epoxysilans und anderer Silane, gewählt aus der Gruppe, bestehend aus Alkoxysilanen, Alkyltrialkoxysilanen, Aryltrialkoxysilanen und hydrolytischen Polykondensationsprodukten davon, ist.

**Revendications**

1. Procédé de préparation d'un revêtement comprenant un réseau polymère d'interpénétration ayant un réseau d'époxyde entrelacé avec un réseau de polysiloxane, caractérisé

(a) en ce qu'on combine un silane choisi dans le groupe constitué des aminosilanes, des époxysilanes, des alkoxysilanes, des alkyltrialkoxysilanes, des aryltrialkoxysilanes et de leurs produits de polycondensation hydrolytique, une résine époxyde ayant au moins deux groupes oxiranes par molécule et au moins un agent de durcissement aminé pour la résine époxyde, cet aminosilane pouvant être le seul agent de durcissement aminé, au moins 0,1 équivalent en poids de silane étant présent pour chaque équivalent en poids de résine époxyde;

(b) en ce qu'on répartit de l'eau d'une manière pratiquement uniforme dans toute la masse de la combinaison ainsi obtenue, avant d'appliquer le mélange à un substrat, dans une quantité suffisante pour réaliser une polycondensation hydrolytique notable du silane pour former un réseau de polysilane; et

(c) en ce qu'on fait réagir d'une manière pratiquement simultanée la résine époxyde avec l'agent de durcissement aminé pour former un réseau de résine époxyde polymérisée entrelacé avec un réseau de polysiloxane.

2. Procédé de la revendication 1, caractérisé en ce qu'un compose carboné ayant moins de neuf atomes de carbone et qui contient une liaison choisie dans le groupe constitué des liaisons oxygène-hydrogène, azotehydrogène, éther et carbonyle est en outre présent dans le mélange.

3. Procédé de la revendication 3, caractérisé en ce que la résine époxyde est durcie avec une quantité suffisante d'agent de durcissement aminé pour fournir de 0,5 à environ 1,2 équivalent en poids d'amine pour chaque équivalent en poids de résine époxyde.

4. Procédé de la revendication 3, caractérisé en ce qu'environ un équivalent en poids d'amine est présent pour chaque équivalent en poids de résine époxyde.

5. Procédé de la revendication 1, caractérisé en ce que le silane est un triméthoxysilane.

6. Procédé de la revendication 1, caractérisé en ce que le réseau polymère d'interpénétration époxy-polysiloxane est formé en présence d'une quantité de charge suffisante pour éviter la formation de domaines visibles.

7. Procédé de la revendication 6, caractérisé en ce que la concentration volumique en pigment de la charge est de 20 à 50%.

8. Procédé de la revendication 1, caractérisé en ce qu'un revêtement ayant une épaisseur de 0,13 mm à 0,51 mm est préparé en pulvérisant le mélange.

9. Procédé de la revendication 1, caractérisé en ce que la résine époxyde est dissoute dans un solvant cétonique qui réagit réversiblement avec l'agent de durcissement aminé en formant une cétimine et de l'eau pour la polycondensation hydrolytique du silane.

10. Procédé de la revendication 9, caractérisé en ce que le solvent cétonique est choisi dans le groupe constitué de la cétone, de la méthyl éthyl cétone, de la méthyl propyl cétone, de la diéthyl cétone, de la 2-hexanone et de la 3-hexanone.

11. Procédé de la revendication 9, caractérisé en ce qu'il comporte une exposition du mélange à l'eau de l'atmosphère pour hydrolyser la cétimine en cétone et en agent de durcissement aminé.

12. Procédé de la revendication 1, caractérisé en ce que la résine époxyde est dissoute dans un mélange de xylène et d'alcool.

13. Procédé de la revendication 12, caractérisé en ce que l'alcool est choisi dans le groupe constitué du méthanol, de l'éthanol, du propanol, de l'isopropanol, du n-butanol, de l'isobutanol, du sec-butanol, du tert-butanol.

14. Procédé de la revendications 12 ou 13, caractérisé en ce que le rapport de l'alcool au xylène est d'au moins 1:1 en poids.

15. Procédé de la revendication 1, caractérisé en ce que la résine époxyde est dissoute dans un mélange de cétone et d'alcool.

16. Procédé de la revendication 15, caractérisé en ce que la cétone est choisie dans le groupe constitué de la cétone, de la méthyl éthyl cétone, de la méthyl propyl cétone, de la diéthyl cétone, de la 2-hexanone, et de la 3-hexanone.

17. Procédé de la revendication 15, caractérisé en ce que le rapport de l'alcool de la cétone est d'au moins 1:1 en poids.

18. Procédé de la revendication 1, caractérisé en ce que l'agent de durcissement aminé contient un aminosilane répondant à la formule générale

$$Y—Si—[O—X]_3$$

dans laquelle

X est indépendamment choisi dans le groupe constitué des radicaux alkyle, hydroxyalkyle, alkoxyalkyle, et hydroxyalkoxyalkyle contenant moins de six atome de carbone, et dans laquelle

Y est $H—[HNR]_a—$, ou

a est un entier de 2 à 6, et

R est un radical difonctionnel choisi indépendamment dans le groupe constitué de radicaux alkyle, aryle, dialkylaryle, alkoxyalkyle, et cycloalkyle, et R peut varier dans un même Y.

19. Procédé de la revendication 18, caractérisé en ce que Y est $H[HN(CH_2)_b]_a—$, dans laquelle

a est un entier de 1 à 10, et

b est un entier de 1 à 6, et b peut varier dans une molécule donnée.

20. Procédé de la revendication 1, caractérisé en ce que le silane est choisi dans le groupe constitué des aminosilanes et époxysilanes, les aminosilanes répondant à la formule générale de la revendication 18 et les époxysilanes répondant à la formule générale:

$$Z—Si—[O—X]_3$$

dans laquelle

X est définie ci-dessus dans la revendication 18; et

Z est un alkyle ou un oxyalkyle, contenant de 2 à 8 atomes de carbone et au moins un groupe oxirane.

21. Procédé de la revendication 20, caractérisé en ce que le rapport dans équivalents de silane totaux aux équivalents d'oxirane est d'au moins 1:1.

22. Procédé de la revendication 20, caractérisé en ce que la source de silane est un mélange d'un aminosilane, d'un époxysilane et d'autres silanes choisis dans le groupe constitué des alkoxysilanes, des alkyltrialkoxysilanes, des aryltrialkoxysilanes et de leurs produits de polycondensation hydrolytique.

Fig. 1

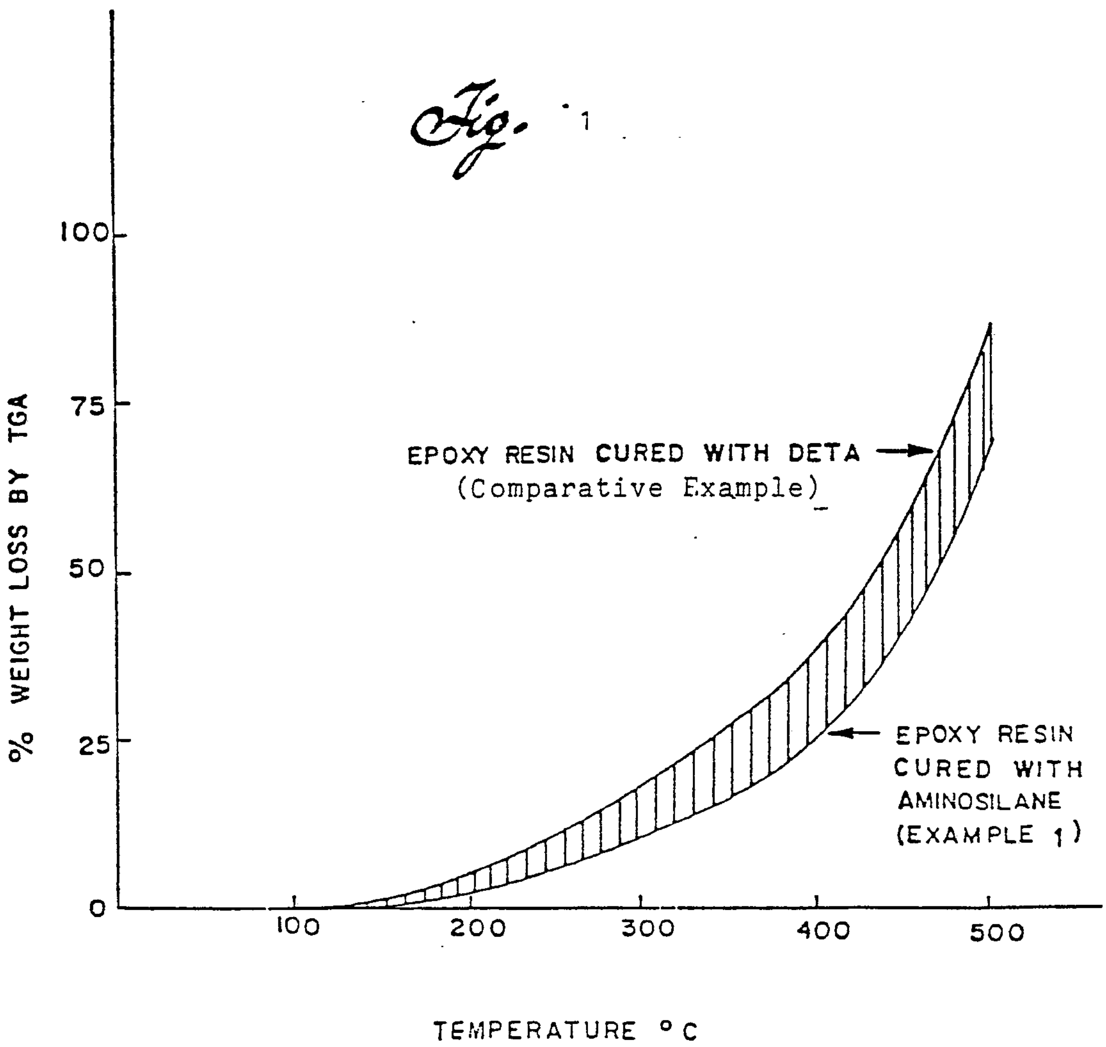

% WEIGHT LOSS BY TGA
100
75
50
25
0
EPOXY RESIN CURED WITH DETA
(Comparative Example)
EPOXY RESIN
CURED WITH
AMINOSILANE
(EXAMPLE 1)
100
200
300
400
500
TEMPERATURE °C

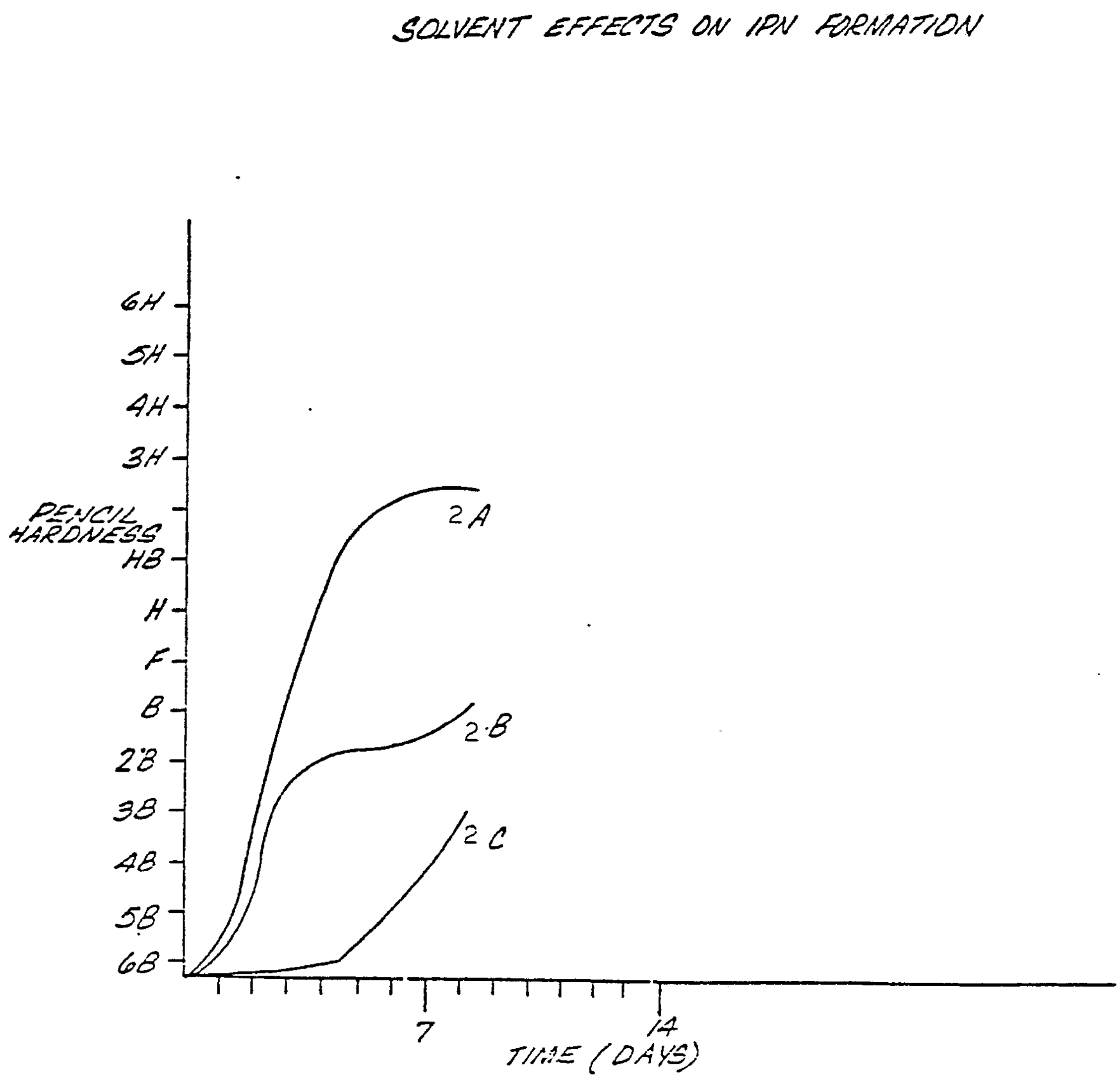
SOLVENT EFFECTS ON IPN FORMATION
6H
5H
4H
3H
PENCIL HARDNESS
HB
H
F
B
2B
3B
4B
5B
6B
2A
2B
2C
7
14
TIME (DAYS)

Fig. 2